**Europäisches Patentamt**

**European Patent Office**

**Office européen des brevets**

(11) Veröffentlichungsnummer : **0 449 908 B1**

(19)

(12) # EUROPÄISCHE PATENTSCHRIFT

(45) Veröffentlichungstag der Patentschrift :
**14.04.93 Patentblatt 93/15**

(21) Anmeldenummer : **90900812.0**

(22) Anmeldetag : **20.12.89**

(86) Internationale Anmeldenummer :
**PCT/EP89/01574**

(87) Internationale Veröffentlichungsnummer :
**WO 90/07281 12.07.90 Gazette 90/16**

(51) Int. Cl.⁵ : **A23J 3/06,** A23J 3/26,
C09H 9/02

(54) **VERFAHREN ZUR HERSTELLUNG VON GELATINEFOLIEN.**

(30) Priorität : **24.12.88 DE 3843844**

(43) Veröffentlichungstag der Anmeldung :
**09.10.91 Patentblatt 91/41**

(45) Bekanntmachung des Hinweises auf die
Patenterteilung :
**14.04.93 Patentblatt 93/15**

(84) Benannte Vertragsstaaten :
**AT BE CH ES FR GB IT LI LU NL SE**

(56) Entgegenhaltungen :
**EP-A- 0 092 908
DE-A- 1 225 846
FR-A- 2 087 185
FR-A- 2 182 188
GB-A- 770 591
Patent Abstracts of Japan,Vol 12 nr 33
(C472)(2880), 30 January 1988, & Jp , A
62181742 (Tech. Rec: Assoc. Extru.COOk
FOOD IND:) 10 Aug 1987 see Abstract**

(73) Patentinhaber : **Deutsche Gelatine-Fabriken
Stoess AG
Postfach 100 Gammelsbacher Strasse 2
W-6930 Eberbach (DE)**

(72) Erfinder : **KOEPFF, Peter
Bergstrasse 142
W-6900 Heidelberg (DE)**
Erfinder : **BRÄUMER, Klaus
Allensteiner Strasse 6
W-6930 Eberbach (DE)**
Erfinder : **STAHL, Helmuth
Am Wäldchen 1
W-6120 Michelstadt (DE)**
Erfinder : **DICK, Eberhard
Hammerfeld 12
W-6124 Beerfelden-Gammelsbach (DE)**

(74) Vertreter : **Hoeger, Stellrecht & Partner
Uhlandstrasse 14 c
W-7000 Stuttgart 1 (DE)**

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 449 908 B1

## Beschreibung

Die Erfindung betriff ein Verfahren zur Herstellung von Gelatinefolien, insbesondere Blattgelatine, aus Pulvergelatine.

Blattgelatine findet bekanntlich auf dem Nahrungsmittelsektor, insbesondere im Haushalt, in Konditoreibetrieben, Diätküchen, Lebensmittelfabriken umfangreiche Anwendung.

Das bekannte Herstellungsverfahren für die folienartige Blattgelatine ist apparativ aufwendig, zeitraubend und kostspielig: Gelatine wird in heißes Wasser eingetragen und unter Rühren gelöst. Dabei wird in die Lösung eine beträchliche Menge Luft eingebracht, so daß nach der vollständigen Auflösung der Gelatine in einem Entgasungsgerät entgast werden muß, um ein blasenfreies Endprodukt zu erhalten. Die entgaste Gelatinelösung mit einem Wassergehalt zwischen 70 und 75 % wird sterilisiert und in heißem Zustand aus einer Gießwanne mit Rakel auf eine gekühlte Walze gegossen. Auf der Walze kühlt die Gelatine ab und erstarrt zu einer Gallerte, die als endloses, breites Band von der Kühlwalze abgezogen und anschließend in einem Schneidwerk in endlose Streifen geschnitten wird. Die Streifen werden anschließend auf ein endloses Netz übergeben und in eine Trockner mit einer Länge von über 100 m eingebracht. Für die Trocknung von 110 kg Gelatine im Trockner müssen 35 bis 40 Mio. Liter Luft umgewälzt werden, wobei die Luft vorher entfeuchtet und entkeimt werden muß. Derart hohe Luftmengen sind deshalb erforderlich, weil die Trocknungsluft nur bis unter den Schmelzpunkt der Gelatine erwärmt werden darf. Nach Verlassen des Trockners werden die Gelatinestreifen in Blätter zerschnitten, die anschließend verpackt oder lose gelagert werden. Die Blattgelatine verläßt den Trockner dabei mit einer Endfeuchte von 10,5 bis 11,5 %.

Bei diesem aufwendigen Löse-, Erstarrungs- und Trocknungsprozeß verliert die Gelatine erheblich an Gallertfestigkeit, nämlich etwa 20 bis 25 Bloomgramm, was etwa 10 % Qualitätsverlust bedeutet.

Das beschriebene Verfahren ist außerordentlich personalaufwendig. Für eine Stundenleistung von 110 kg Blattgelatine sind 6 bis 7 Bedienungspersonen erforderlich. Insbesondere muß das Verpacken der Blattgelatineblätter von Hand erfolgen. Es ist blisher noch nicht gelungen, in diesem Zusammenhang Zählmaschinen und Packautomaten einzusetzen, und zwar aus folgendem Grund: bei der Trocknung der Blattgelatine treten Schrumpfeffekte auf. Die Blätter neigen zum Rollen, sie müssen daher so auf ein Netzwerk aufgelegt werden, daß sie dort leicht haften. Hierdurch entsteht auf der Blattgelatine ein Netzabdruck. All dies führt unvermeidlich zu einer gewellten Blattoberfläche, wobei insbesondere die Randpartien der Blätter wegen des besonders starken Schrumpfes besonders markant gewellt sind. Aufgrund dieser Unebenheiten an der Blattoberfläche, insbesondere am Blattrand, verhaken sich die Blätter beim Vereinzeln und können somit von Automaten nicht behandelt werden.

Des weiteren sind auch die Ausschußquoten bei der Endkontrolle der Packungen sehr hoch.

Es ist Aufgabe der Erfindung, den geschilderten Mängeln abzuhelfen und ein neues Verfahren zur Herstellung von Gelatinefolien, insbesondere Blattgelatine, anzugeben, das gegenüber dem bekannten Verfahren erheblich vereinfacht ist und insbesondere zu gleichmäßigen, glatten Endprodukten führt, die automatisch weiterbehandelt, insbesondere auch verpackt werden können.

Die Aufgabe wird erfindungsgemäß dadurch gelöst, daß man die Pulvergelatine unter Zusatz von 5 bis 40 Gew.% Wasser bezogen auf die Gesamtmasse bei erhöhtem Druck von 5 bis 250 bar und erhöhter Temperatur von 40 bis 200°C unter Einwirken von Scherkräften plastifiziert, die plastifizierte Masse in Form einer Folie durch eine Schlitzdüse preßt, die Folie von der Schlitzdüse unter Spannung abzieht und die Folie trocknet.

Die Folie kann anschließend leicht zu Blättern zerschnitten werden, die von gleichmäßiger, glatter Beschaffenheit sind, so daß sie ohne Störungen auch von Automaten weiterverarbeitet, insbesondere verpackt werden können.

Die nachstehende Beschreibung bevorzugter Ausführungsformen der Erfindung dient im Zusammenhang mit einigen Ausführungsbeispielen und dem beiliegenden Blockschema der weiteren Erläuterung.

Nach dem erfindungsgemäßen Verfahren wird Gelatinefolie, insbesondere in Form von Blattgelatine, wie folgt produziert und automatisch verpackt:

Pulvergelatine mit einem handelsüblichen Wassergehalt von 8 bis 12 % wird aus einem Vorratssilo mit konstanter zeitlicher Fördermenge in einen Extruder gefördert, vorzugsweise einen Zweischneckenextruder mit gleichsinnig umlaufenden Schnecken. In einer der Pulvergelatinezuführung benachbarten Zone wird über eine Dosierpumpe Wasser zugeführt, und zwar in einer Menge zwischen 3 und 40 Gew.%, bezogen auf die Gesamtmasse. Die zudosierte Wassermenge ist also gegenüber dem bekannten Verfahren (70 bis 75 Gew.%) erheblich niedriger. Bevorzugte Zudosierungen sind 5 bis 30 oder auch 10 bis 25 Gew.%.

An die Einführzonen des Extruders für Pulvergelatine und Wasser schließen sich in bekannter Weise weitere Zonen an, die beheizt werden. Es kommen beispielsweise Temperaturen von 50 bis 120° C steigend in Frage, wobei die angegebene Endtemperatur jeweils am Extruderausgang gemessen wird. Es kann am Extruder jedoch auch ein Temperaturprofil mit steigenden und fallenden Temperaturen erzeugt werden.

Durch das Zusammenwirken der Temperatur, der im Extruder erzeugten Scherkräfte (abhängig von der Schneckenkonfiguration und der Drehzahl) und den im Extruder herrschenden Drücken wird die Gelatinemasse plastifiziert.

Die im Extruder auftretenden Drücke können bis zu 250 bar betragen. Vorzugsweise liegen sie zwischen 5 und 200, insbesondere zwischen 10 und 150 bar. Die während der Plastifizierung auftretenden Temperaturen können bis zu 200°C reichen. Vorzugsweise liegen sie zwischen 40 und 160°C, insbesondere zwischen 80 und 130°C. Die angegebenen Druckwerte wurden jeweils am Extruderausgang gemessen.

Am Ausgang des Extruders ist eine an sich bekannte, vorzugsweise heizbare Flachfoliendüse in Gestalt einer Schlitzdüse mit vorzugsweise einstellbarer Schlitzhöhe angebracht. Durch diese Düse wird unter Druck ein flaches Band extrudiert. Die Bandbreite kann nahezu beliebig, bis zu etwa 2 m gewählt werden. Durch Einstellung der Schlitzdüse lassen sich Folienstärken im Bereich von 0,01 bis 3 mm erzielen. Bevorzugte Werte liegen zwischen 0,05 und 0,5 mm. Aus dicken Folien lassen sich Platten herstellen, die dünnen Folien eignen sich in erster Linie für die Herstellung von Blattgelatine.

Das aus der Schlitzdüse austretende Gelatineband wird anschließend. z. B. über heiz- oder kühlbare Walzen unter Spannung abgezogen und über eine kurze Trocknungsstrecke geführt. In dieser kurzen Trocknungsstrecke wird das zur Plastifizierung notwendige Wasser wieder entfernt. Der benötigte Trockner kann gegenüber dem bekannten Verfahren sehr klein gewählt werden, weil der Trocknungsprozeß bei den plastifizierten Gelatinebändern sehr einfach ist: die zu entfernende Wassermenge ist relativ gering. Der Schmelzpunkt von plastifizierter Gelatine liegt sehr hoch, so daß mit Trocknungslufttemperatur von über 100°C gearbeitet werden kann. Die plastifizierte Masse verläßt den Extruder mit Temperaturen von etwa 100°C, da eine Gelierung entfällt. Die dünne, flexible Gelatinefolie muß nicht auf einem Trocknungsnetz fixiert werden, sondern kann über Umlenkrollen geführt werden. Daher ist eine Trocknung auf kleinstem Raum möglich, weil dieser dreidimensional genutzt werden kann. Die Warmluft kann beidseitig auf die vorlaufende Gelatinefolie aufgebracht werden. Es tritt auch keine Verspannung sowie keine Wellung der Folie infolge eines ungleichen Schrumpfes auf, und zwar insbesondere deswegen, weil das Gelatineband nicht mit einem Netz verhaftet ist.

Am Ausgang der Trocknungsstrecke wird die Gelatinefolie auf Blattgröße (beispielsweise 70x230 mm) geschnitten. Das Schneiden erfolgt vorzugsweise unmittelbar hinter dem Trockner, weil dort die Gelatinefolie noch in gewissen Maße plastisch ist.

Die fertigen Blätter können anschließend mit Hilfe herkömmlicher Packautomaten verpackt werden, weil die so gewonnene Blattgelatineblätter gleichmäßig eben und glatt sind, sowie insbesondere keine gewellten Randabschnitte aufweisen. Aufgrund dieser exzellenten Struktur kann die Gelatinefolie auch als Rollenware abgepackt werden. Ein als Rollenware verpacktes Band kann zur anschließenden Portionierung in Blättern quer perforiert und hierdurch mit Sollbruchstellen versehen werden. Im noch plastischen Zustand der Gelatinefolie können auch Prägungen, beispielsweise Typ- oder Gewichtsangaben, problemlos aufgebracht werden.

Die für die beschriebene Gelatinefolienproduktion benötigten Apparaturen (Extruder, Abziehwalzen, Schneidwerke, Zählwerke, Verpackungsmaschinen, gegebenenfalls auch Kalander) sind von anderen Zweigen der Kunststoff- oder Lebensmittelindustrie her bekannt und können nunmehr ohne weiteres auch bei der Blattgelatineherstellung eingesetzt werden. Diese Apparate arbeiten weitgehend automatisch und erfodern im wesentlichen keine Bedienung.

Das beschriebene Herstellungsverfahren führt also zu erheblicher Personal- und Produktionsraumeinsparung. Darüber hinaus zeigt die so gewonnene Blattgelatine praktisch auch keinen Verlust an Gelierkraft (Bloom), zumindest ist dieser Verlust nach den bisherigen Erfahrungen wesentlich geringer als bei dem bekannten Produktionsverfahren.

Die beschriebene Herstellung von Gelatinefolien nach dem Plastifizierverfahren kann - im wesentlichen mit dem gleichen Extruder auch in Form eines Folienblasverfahrens unter Zuhilfenahme einer an sich bekannten Ringdüse ausgeführt werden, so daß sich eine Schlauchfolie ergibt, die durch den Blasvorgang biaxial gestreckt ist.

Eine mit Hilfe einer Flachfoliendüse erzeugte Gelatinefolie kann in üblicher Weise über Kalanderwalzen geführt werden, wodurch die Dicke der (später zur Blattgelatine zerschnittenen) Blattgelatine auf gewünschte Werte eingestellt werden kann. Der Kalander könnte gekühlt sein und auf diese Weise eine eigene Kühlwalze ersetzen.

Die Gelatinefolie kann bei dem unter Spannung erfolgenden Abziehen von der Schlitzdüse mit Hilfe an sich bekannter Apparate (Walzenstuhl) auch gestreckt und in ihrer Dicke reduziert werden. Beim Blasen einer schlauchförmigen Folie erfolgt eine solche Streckung und Dickenreduzierung ohnehin.

Der im Extruder zu plastifizierenden Gelatinemasse können vor dem Auspressen durch die Schlitzdüse Zuschlagstoffe zugefügt werden, insbesondere Pektin, Alginat, Stärke, andere pflanzliche Hydrocolloide, Geschmacks- und/oder Aromastoffe, Farbstoffe und /oder Weichmacher, wobei als Weichmacher insbesondere Glyzerin, Sorbit oder Äthylenglykol in Frage kommen. Weitere Zuschlagstoffe sind: Fette, Öle, andere pflanz-

EP 0 449 908 B1

liche und tierische Proteine, anorganische Zuschlagstoffe und/oder Zelluloseprodukte einschließlich Holzmehl.

Beispiel 1

Handelsübliche Pulvergelatine mit folgenden physikalischen Daten:

| Bloom | Viskosität | Farbe | Klarheit | ph-Wert | Feuchte |
|---|---|---|---|---|---|
| 248 g | 87 mP | 16 | 005 | 5,1 | 9,7 % |

wurde in einer Menge von 5 kg/h in einen Zweischneckenextruder mit gleichsinnig umlaufenden Schnecken eindosiert. An einer weiteren Dosierstelle wurden 0,55 kg/h kaltes Wasser eingepumpt. Zusammen mit der ursprünglichen Feuchte der Pulvergelatine beträgt der Gesamtwassergehalt somit 19,7 Gew.%. Die zehn Heizzonen des Extruders waren zwischen 50 und 110°C temperiert, und zwar ansteigend auf 110°C und dann wieder abfallend auf 90°C am Extruderausgang. Der am Extruderausgang gemessene Druck betrug 40 bar. Die Masse wurde unter Anwendung von Scherkraft, Temperatur und Druck im Extruder plastifiziert und über eine heizbare Flachfoliendüse mit einer Schlitzbreite von 140 mm als 0,08 mm dickes Endlosband extrudiert. Das extrudierte Band wurde mittels eines Chill-roll-Systems unter Snannung von der Düse abgezogen, getrocknet und auf etwa Raumtemperatur abgekühlt. Im noch plastischen Zustand wurde das Endlosband nach der Trocknung in Einzelblätter 80x228 mm zerschnitten und anschließend verpackt, wobei 600 Blatt ein Gewicht von etwa 1 kg hatten.

Die Analyse der so produzierten Blattgelatine ergab:

| Bloom | Viskosität | Farbe | Klarheit | pH-Wert | Wassergehalt |
|---|---|---|---|---|---|
| 235 g | 87 | 17 | 005 | 5,1 | 10,3 % |

Beispiel 2

Pulvergelatine mit einer Gelierkraft vom 182 Bloom mit einem Wassergehalt von 10, 7 % wurde, wie im Beispiel 1 beschrieben, in den Extruder dosiert und plastifiziert. Die Dosiermenge der Gelatine betrug 6,85 kg/h, diejenige des Wassers 0,95 kg/h, was einen Gesamtwassergehalt von 22,7 Gew.% ergab. Mit einem Druck von 32 bar wurde über eine Breitschlitzdüse mit einem Düsenspalt von 0,12 mm Höhe ein Band von 140 mm Breite extrudiert. Das Band wurde über ein Chill-roll-System abgezogen und getrocknet. Die Walzen des Chill-roll-Systems waren auf 40° C aufgeheizt. Im noch plastischen Zustand wurde das Band in Gelatineblätter mit den Maßen 80x228 mm zerschnitten.
Die Gelatine hatte eine Gallertfestigkeit von 168 Bloom und einem Restwassergehalt von 11,9 Gew.%. Die entsprach damit der üblichen Qualität 400.

Beispiel 3

Pulvergelatine wurde wie in Beispiel 2 in einer Menge von 4,7 kg/ h in den Extruder eindosiert. 0,93 kg/h kaltes Wasser wurden zudosiert (Gesamtwassermenge etwa 26 Gew.%). Die Plastifizierung erfolgte bei 115° C. Die plastifizierte Masse wurde über einen Blasfolienkopf mit Ringschlitzdüse extrudiert. Das Material war so flexibel, daß durch Variation der Stützluftmenge der extrudierte Schlauch nahezu beliebig aufgeblasen und hierdurch die Folienstärke in weiten Grenzen variiert werden konnte, beispielsweise bis 0,01 mm. Die Folien wurden im noch plastischen Zustand zu endlosen Streifen geschnitten und im Heißluftstrom nachgetrocknet.

Beispiel 4

Pulvergelatine mit folgender Qualität:

| Bloom | Viskosität | Farbe | Klarheit | pH-Wert | Wassergehalt |
|---|---|---|---|---|---|
| 112 g | 51 | 38 | 010 | 6,4 | 11,7 % |

4

wurde in einer Menge von 6,0 kg/h in einen gleichläufigen Doppelschneckenextruder eingebracht. In eine benachbarte Zone des Extruders wurde kaltes Wasser in einer Menge von 0,5 kg/h (Gesamtwassermenge 19,4 Gew.%) eindosiert. Die Plastifizierung erfolgte bei Temperaturen, die von Extruderzone zu Extruderzone ansteigend zwischen 50 und 100° C lagen. Der Massedruck (gemessen am Extruderausgang) betrug 65 bar. Die plastifizierte Masse wurde durch eine Breitschlitzdüse von 140 mm Breite und 0,24 mm Höhe extrudiert. Das entstehende Band wurde unter Spannung mit einem Chill-roll-System abgezogen. Anschließend wurde im Heißluftstrom (ca. 110° C) das Überschußwasser entfernt, so daß ein Restwassergehalt von 12 Gew.% verblieb. Im noch plastischen Zustand wurde das Band in Blätter mit den Maßen 80x228 mm zerschnitten. Es ergab sich eine Blattgelatine mit einem Bloomwert von 105 g.

## Beispiel 5

Man verfährt wie in Beispiel 4 beschrieben. Bei der Extrusion wird jedoch die Höhe des Düsenschlitzes auf 0,5 mm eingestellt. Der Massedruck liegt hierdurch niedriger als in Beispiel 4. Das plastische Gelatineband wird über einen Kalander mit drei Walzen auf eine Banddicke von 0,23 mm kalibriert. Nach dem Schneiden ergibt sich eine Blattgelatine der gleichen Qualität.

## Beispiel 6

Man plastifiziert und extrudiert wie in Beispiel 1 beschrieben. Zusätzlich wird in die vierte Zone das Extruders eine rote Lebensmittelfarbe in einer Menge von 25 g/h dosiert. Es ergibt sich eine rote Blattgelatine guter Qualität, die sich beispielsweise für Tortenguß eignet.

## Beispiel 7

Man verfährt wie in Beispiel 5. Nach dem Schneiden wird im noch plastischen Zustand der amorphen Gelatinemasse mit einem beheizten Stempel eine Signierung eingeprägt.

## Beispiel 8

Man plastifiziert und extrudiert wie in Beispiel 1 beschrieben. Die Höhe des Düsenschlitzes beträgt jedoch 0,2 mm. Für den unter Spannung erfolgenden Abzug des Bandes wird ein Kalander benutzt, der die Dicke des Bandes auf 0,152 mm reduziert. Im noch plastischen Zustand werden aus dem Band Gelatineblätter mit einer Stückgröße von 100x50 mm gestanzt. Die Blätter haben ein Gewicht von 1 g/Stück (Dichte der Gelatine = 1,32 g/cm³).

## Beispiel 9

Die im Beispiel 1 verwendete Pulvergelatine wurde gemäß Beispiel 4 extrudiert und kalibriert. Der Gesamtwassergehalt betrug jedoch 26 Gew.%. Mit Hilfe eines Kalanders wurde die Banddicke auf etwa 0,42 mm reduziert. Das endlose Band wurde im noch plastischen Zustand auf eine Breite von 30 mm geschnitten. Aus dem Band wurden anschließend Gelatineblätter mit einer Stückgröße von 100 x30 mm ausgestanzt.

## Beispiel 10

470 kg/h pharmazeutische Gelatine gemäß DAB 9 (Deutsches Arzneimittelbuch, 9. Auflage) wurden, wie im Beispiel 3 beschrieben, in Form einer Blasfolie extrudiert, deren Folienstärke 0,01 mm betrug. In die Zone 1 des Extruders wurde destilliertes Wasser in einer Menge von 0,4 kg/h eingepumpt. In die Zone 4 des Extruders wurde Glyzerin von pharmazeutischer Qualität in einer Menge von 0,5 kg/h zudosiert. Die extrudierte Folie wurde im noch plastischen Zustand perforiert. Die so gewonnenen Folienstücke eignen sich als hämostatische, resorbierbare Wundauflage.

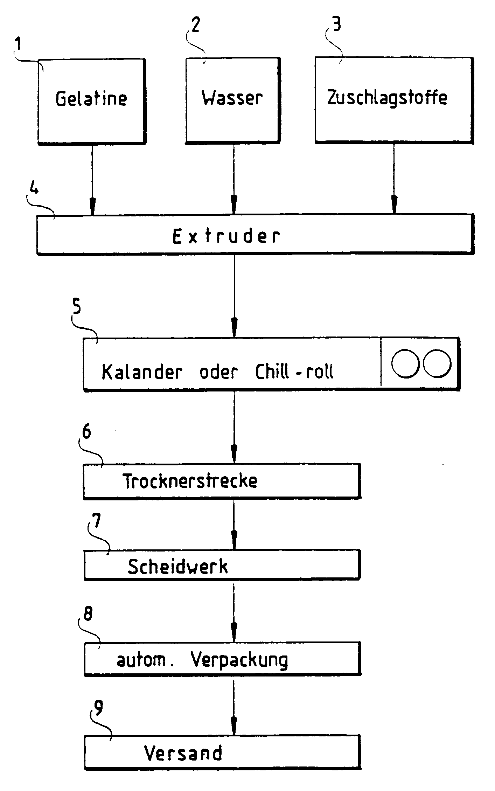

Das auf der Zeichnung dargestellte Blockschema gibt die einzelnen Schritte des erfindungsgemäßen Verfahrens noch einmal in übersichtlicher Weise wieder. Die Ausgangssubstanzen Gelatine 1, Wasser 2 und Zuschlagstoffe 3 werden in einen Extruder 4 an geeigneter Stelle eingegeben. Die aus der Schlitzdüse des Extruders austretende Gelatinefolie wird über die Walzen 5 eines Chill-roll-Systems oder Kalanders gespannt und gegebenenfalls gestreckt und in ihrer Dicke reduziert. Die so behandelte Folie durchläuft eine Trocknerstrecke 6 und wird anschließend in einem Schneidwerk 7 in einzelne Blattgelatineblätter zerschnitten. In einer Verpackungsstation 8 erfolgt die automatische Verpackung der Gelatineblätter. Die verpackte Blattgelatine gelangt schließlich in eine Versandstation 9.

## Patentansprüche

1. Verfahren zur Herstellung von Gelatinefolien, insbesondere Blattgelatine, aus Pulvergelatine, **dadurch gekennzeichnet,** daß man die Pulvergelatine unter Zusatz von 5 bis 40 Gew.% Wasser bezogen auf die Gesamtmasse bei erhöhtem Druck von 5 bis 250 bar und erhöhter Temperatur von 40 bis 200°C unter Einwirken von Scherkräften plastifiziert, die plastifizierte Masse in Form einer Folie durch eine Schlitzdüse preßt, die Folie von der Schlitzdüse unter Spannung abzieht und die Folie trocknet.

2. Verfahren nach Anspruch 1, dadurch gekennzeichnet, daß zwischen 5 und 30 Gew.% Wasser zugesetzt werden.

3. Verfahren nach Anspruch 1, dadurch gekennzeichnet, daß zwischen 10 und 25 Gew.% Wasser zugesetzt werden.

4. Verfahren nach Anspruch 1, dadurch gekennzeichnet, daß bei einem erhöhten Druck von 5 bis 200 bar plastifiziert wird.

5. Verfahren nach Anspruch 1, dadurch gekennzeichnet, daß bei einem erhöhten Druck von 10 bis 150 bar plastifiziert wird.

6. Verfahren nach Anspruch 1, dadurch gekennzeichnet, daß bei einer erhöhten Temperatur von 40 bis 160°C plastifiziert wird.

7. Verfahren nach Anspruch 1, dadurch gekennzeichnet, daß bei einer erhöhten Temperatur von 80 bis 130°C plastifiziert wird.

8. Verfahren nach Anspruch 1, dadurch gekennzeichnet, daß die Folie mit einer Dicke zwischen 0,01 und 3 mm aus der Schlitzdüse gepreßt wird.

9. Verfahren nach Anspruch 1, dadurch gekennzeichnet, daß die Folie mit einer Dicke zwischen 0,05 und 0,5 mm aus der Schlitzdüse gepreßt wird.

10. Verfahren nach Anspruch 1, dadurch gekennzeichnet, daß die Folie beim Abziehen von der Schlitzdüse gestreckt und hierdurch in ihrer Dicke reduziert wird.

11. Verfahren nach Anspruch 1, dadurch gekennzeichnet, daß die Folie schlauchförmig durch eine Ringschlitzdüse gepreßt und durch Blasen gestreckt wird.

12. Verfahren nach Anspruch 1, dadurch gekennzeichnet, daß die Folie durch Kalandrieren auf eine bestimmte Dicke eingestellt wird.

13. Verfahren nach Anspruch 1, dadurch gekennzeichnet, daß die gespannte Folie in einem Luftstrom getrocknet wird.

14. Verfahren nach Anspruch 1, dadurch gekennzeichnet, daß die fertige Folie gekühlt wird.

15. Verfahren nach Anspruch 1, dadurch gekennzeichnet, daß die Folie in Einzelblätter zerschnitten wird.

16. Verfahren nach Anspruch 1, dadurch gekennzeichnet, daß der Masse vor dem Auspressen durch die Schlitzdüse Zuschlagstoffe zugefügt werden.

17. Verfahren nach Anspruch 16, dadurch gekennzeichnet, daß als Zuschlagstoffe Pektin, Alginat, Stärke, andere pflanzliche Hydrocolloide, Geschmacks- und/oder Aromastoffe, Farbstoffe und/oder Weichmacher, Fette, Öle und andere pflanzliche und tierische Proteine, anorganische Zuschlagstoffe und/oder Zelluloseprodukte einschließlich Holzmehl zugefügt werden.

**18.** Verfahren nach Anspruch 17, dadurch gekennzeichnet, daß als Weichmacher Glyzerin, Sorbit oder Äthylenglykol zugefügt wird.

## Claims

**1.** Process for the preparation of gelatine films especially sheet gelatine from gelatine powder, characterised in that, the gelatine powder is plasticized under the action of shear forces at an elevated pressure from 5 to 250 bar and at an elevated temperature from 40 to 200 °C with the addition of 5 to 40 weight % water based on the total weight, the plasticized material is pressed through a slit die to give a film which is drawn off from the slit die under tension, and the film is then dried.

**2.** Process in accordance with Claim 1, characterised in that, between 5 and 30 weight % water is added.

**3.** Process in accordance with Claim 1, characterised in that, between 10 and 25 weight % water is added.

**4.** Process in accordance with Claim 1, characterised in that, plasticization is carried out at an elevated pressure from 5 to 200 bar.

**5.** Process in accordance with Claim 1, characterised in that, plasticization is carried out at an elevated pressure from 10 to 150 bar.

**6.** Process in accordance with Claim 1, characterised in that, plasticization is carried out at an elevated temperature from 40 to 160 °C.

**7.** Process in accordance with Claim 1, characterised in that, plasticization is carried out at an elevated temperature from 80 to 130 °C.

**8.** Process in accordance with Claim 1, characterised in that, the film has a thickness between 0.01 and 3 mm when it is pressed out of the slit die.

**9.** Process in accordance with Claim 1, characterised in that, the film has a thickness between 0.05 and 0.5 mm when it is pressed out of the slit die.

**10.** Process in accordance with Claim 1, characterised in that, the film is stretched when it is drawn from the slit die and its thickness is thereby reduced.

**11.** Process in accordance with Claim 1, characterised in that, the film is pressed through a ring die to form a tube and is stretched by blowing.

**12.** Process in accordance with Claim 1, characterised in that, the film is adjusted to a given thickness by calendering.

**13.** Process in accordance with Claim 1, characterised in that, the stretched film is dried in a stream of air.

**14.** Process in accordance with Claim 1, characterised in that, the finished film is cooled.

**15.** Process in accordance with Claim 1, characterised in that, the film is cut into individual sheets.

**16.** Process in accordance with Claim 1, characterised in that, additives are added to the material before pressing it through the slit die.

**17.** Process in accordance with Claim 16, characterised in that, pectin, alginate, starches, other vegetable hydrocolloids, flavourings and/or fragrances, colouring and/or plasticizer, fats, oils and other vegetable and animal proteins, inorganic additives and/or cellulose products including wood flour are incorporated as additives.

**18.** Process in accordance with Claim 17, characterised in that, glycerol, sorbitol or ethylene glycol is incorporated as a plasticizer.

**Revendications**

1. Procédé pour la fabrication de films en gélatine, notamment de gélatine en feuilles, à partir de gélatine en poudre, caractérisé en que l'on plastifie la gélatine en poudre sous l'action de forces de cisaillement, avec une adjonction de 5 à 40 % en poids d'eau par rapport à la masse totale, sous une pression accrue comprise entre 5 et 250 bars et une température accrue comprise entre 40 et 200°C, on comprime la masse plastifiée sous la forme d'un film à travers une filière d'extrusion à fente, on tire le film sous tension hors de la filière à fente et on sèche le film.

2. Procédé selon la revendication 1, caractérisé en ce que l'eau est ajoutée à une valeur comprise entre 5 et 30 % en poids.

3. Procédé selon la revendication 1, caractérisé ce que l'eau est ajoutée à une valeur comprise entre 10 et 25 % en poids.

4. Procédé selon la revendication 1, caractérisé en ce que la plastification a lieu à une pression accrue comprise entre 5 et 200 bars.

5. Procédé selon la revendication 1, caractérisé en ce que la plastification a lieu à une pression accrue comprise entre 10 et 150 bars.

6. Procédé selon la revendication 1, caractérisé en ce que la plastification a lieu à une température accrue comprise entre 40 et 160°C.

7. Procédé selon la revendication 1, caractérisé en ce que la plastification a lieu à une température accrue comprise entre 80 et 130°C.

8. Procédé selon la revendication 1, caractérisé en ce que le film est comprimé à une épaisseur comprise entre 0,01 et 3 mm à la sortie de la filière à fente.

9. Procédé selon la revendication 1, caractérisé en ce que le film est comprimé à une épaisseur comprise entre 0,05 et 0,5 mm à la sortie de la filière à fente.

10. Procédé selon la revendication 1, caractérisé en ce que par une traction hors de la filière à fente le film est étiré et ainsi son épaisseur est réduite.

11. Procédé selon la revendication 1, caractérisé en ce que le film est comprimé sous une forme tubulaire à travers une filière d'extrusion à fente annulaire et il est étiré par soufflage.

12. Procédé selon la revendication 1, caractérisé en ce que le film est mis par calandrage à une épaisseur donnée.

13. Procédé selon la revendication 1, caractérisé en ce que le film tendu est séché dans un courant d'air.

14. Procédé selon la revendication 1, caractérisé en ce que le film terminé est refroidi.

15. Procédé selon la revendication 1, caractérisé en ce que le film est coupé en feuilles individuelles.

16. Procédé selon la revendication 1, caractérisé en ce que des matières d'addition sont ajoutées à la masse avant son extrusion à travers la filière à fente.

17. Procédé selon la revendication 16, caractérisé en ce que sont ajoutés comme additifs de la pectine, de l'alginate, de l'amidon, d'autres colloïdes aqueux végétaux, des matières aromatiques artificielles et/ou des substances savoureuses, des colorants et/ou des plastifiants, des graisses, des huiles et d'autres protéines animales ou végétales, des matières d'addition inorganiques et/ou des produits cellulosiques, y compris de la farine de bois.

18. Procédé selon la revendication 17, caractérisé en ce que sont ajoutés comme plastifiants de la glycérine, du sorbitol ou de l'éthylèneglycol.

```
  1              2                3
┌──────────┐  ┌──────────┐  ┌──────────────┐
│ Gelatine │  │  Wasser  │  │ Zuschlagstoffe│
└────┬─────┘  └────┬─────┘  └──────┬───────┘
     │             │               │
  4  ▼             ▼               ▼
┌──────────────────────────────────────────┐
│              Extruder                      │
└──────────────────┬─────────────────────────┘
                   │
  5                ▼
┌──────────────────────────────────┬────────┐
│   Kalander  oder  Chill - roll    │  ○ ○   │
└──────────────────┬───────────────┴────────┘
                   │
  6                ▼
┌──────────────────────────┐
│     Trocknerstrecke       │
└──────────────┬────────────┘
  7            ▼
┌──────────────────────────┐
│      Scheidwerk           │
└──────────────┬────────────┘
  8            ▼
┌──────────────────────────┐
│   autom.  Verpackung      │
└──────────────┬────────────┘
  9            ▼
┌──────────────────────────┐
│       Versand             │
└──────────────────────────┘
```